Europäisches Patentamt

European Patent Office

Office européen des brevets

(11) Veröffentlichungsnummer: **0 309 685**

**A2**

## (12) EUROPÄISCHE PATENTANMELDUNG

(21) Anmeldenummer: 88112584.3

(22) Anmeldetag: 03.08.88

(51) Int. Cl.⁴ **G06F 3/023 , G06F 3/033**

(30) Priorität: 26.09.87 DE 3732519

(43) Veröffentlichungstag der Anmeldung:
05.04.89 Patentblatt 89/14

(84) Benannte Vertragsstaaten:
CH DE FR GB IT LI SE

(71) Anmelder: **AEG Olympia Aktiengesellschaft
Postfach 960
D-2940 Wilhelmshaven(DE)**

(72) Erfinder: **Behrens, Herbert, Patent-Ing.
August-Hinrichs-Strasse 10
D-2932 Neuenburg(DE)**
Erfinder: **Zeising, Norbert, Dipl.-Phys.
Jenaer Strasse 4
D-2900 Oldenburg(DE)**

(54) **Anordnung zum Eingeben und Verarbeiten von Zeichen und/oder grafischen Mustern.**

(57) Es sind Eingabesysteme für Büroarbeitsplätze,
z. B. für intelligente Schreibmaschinen bekannt, mit
denen neben Text auch Grafikanteile erstellt und
ausgegeben werden können. Hierbei sind die Eingabetastatur und die Eingabefläche für die Grafikeingabe nebeneinander angeordnet, wobei für die Text-
und für die Grafikausgabe getrennte Steuereinheiten
vorgesehen sind. Diese Nachteile werden erfindungsgemäß vermieden durch die echte Kombination einer Tastatur und eines Grafik-Tabletts, wobei
die Sensorfunktion des Grafik-Moduls von dem
Tablett-Modul mit übernommen werden kann. Die
Platzanforderung für einen so gestalteten Arbeitsplatz ist hierdurch gegenüber den Anordnungen erheblich reduzierbar. Die Sonderfunktionen getrennter
Cursorsteuervorrichtungen wie z. B. von der Maus
werden durch die Tablettfunktionen mit übernommen.

Fig. 2

EP 0 309 685 A2

## Anordnung zum Eingeben und Verarbeiten von Zeichen und/oder grafischen Mustern

Die Erfindung betrifft eine Anordnung zum Eingeben und Verarbeiten von Zeichen und/oder grafischen Mustern gemäß dem Oberbegriff des Patentanspruchs 1.

Aus der DE-OS 25 17 555 ist eine Anordnung zum Eingeben von Zeichen bekannt, die eine Eingabeeinheit, eine Ausgabeeinheit und eine Steuereinheit aufweist. Die Anordnung ist flach ausgebildet und auf der Oberseite sind die Eingabeeinheit und die Ausgabeeinheit angeordnet. Die Eingabeeinheit ist in Form einer Tastatur ausgebildet und die Ausgabeeinheit ist als Anzeige ausgebildet, die vorzugsweise ebensoviele Zeichenfelder aufweist, wie in einer Zeile auf einer Papierseite in DIN A 4 Hochformat unterzubringen sind. Diese bekannte Anordnung eignet sich sowohl für die Eingabe von Texten als auch von Ziffern und kann sowohl als Textstation als auch als Flächeneinheit verwendet werden. Diese Anordnung ist aber nicht über eine normale alphanumerische Tastatur mit beweglichen Tasten zu bedienen.

Durch die DE-OS 34 31 255 ist eine elektronische Notizeinrichtung mit einer Eingabeeinheit zur Eingabe handgeschriebener Daten und eine Tasteneingabeeinheit bekannt. Diese Einrichtung ist aber nicht als Terminal für komfortable Büroarbeitsplätze geeignet.

Ein Terminal mit einem Tasten-Bildschirm zur Steuerung einer Schreibstation wird durch die DE-OS 33 14 868 offenbart. Die Schreibstation kann hierbei zum Aufzeichnen alphanumerischer Zeichen auf einem Informationsträger oder zur Eingabe von Zeichen in einen Rechner dienen.

Eine alphanumerische Tastatur besteht gemäß der DE-OS 33 40 370 aus einem Eingabefeld mit Sensoren und einem nachgeschalteten Mikrocomputer. Da keine Tasten vorhanden sind une eine manuelle Eingabe vorgesehen ist, wird eine kleine und preiswerte Tastatur ermöglicht.

Weiterhin ist durch die europäische Patentanmeldung EP-OS 0 112 972 eine Datenverarbeitungsanlage bekannt, bei der Zeichen über eine ASCII-Tastatur und grafische Zeichen über ein gesondertes Grafiktablett erzeugt werden. Hierdurch entsteht eine Eingabeeinheit mit verhältnismäßig großen Abmessungen.

Aufgabe der Erfindung ist es, eine Anordnung zum Eingeben und Verarbeiten sowohl von Zeichen als auch von grafischen Mustern in elektronischen Datenverarbeitungsanlagen zu schaffen, die eine kompakte Ausbildung der Eingabeeinheit gewährleistet und die sowohl zum Eingeben von handschriftlichen Zeichen und/oder grafischen Mustern als auch von numerischen Schriftzeichen mittels einer üblichen Tastatur mit beweglichen Tasten geeignet ist. Diese Aufgabe wird durch die im Patentanspruch 1 gekennzeichnete Erfindung gelöst.

Die Anordnung hat den Vorteil, daß sie sehr einfach zu handhaben und kompakt ausgebildet ist. Die Sensorfunktion der Tastatur kann von dem Tablett-Modul mit übernommen werden. Auch ist eine getrennte Cursorsteuereinrichtung, z.B. eine Maus nicht mehr erforderlich, da diese von dem Tablett-Modul ebenfalls mit übernommen wird. Darüberhinaus sind sowohl alphanumerische Zeichen komfortabel mittels einer Tastatur mit beweglichen Tasten als auch handschriftlich eingegebene Zeichen und/oder grafische Muster auf einfachste Weise mit einem Griffel etc. erzeugbar. Die universelle Verwendbarkeit und die kleinen Abmessungen der Anordnung werden durch den Einsatz großflächiger und fein gerasterter Sensorflächen der Eingabeeinheit und Anzeigeflächen der Ausgabeeinheit erreicht, die mechanisch und elektrisch mit einer darunter liegenden Steuereinheit verbunden sind. Die Steuereinheit ist beispielsweise die Bodenfläche des Gerätes und kann Mikrorechner, Speicher, elektronische Schaltungen und eine Batterie enthalten.

Bei einer speziellen Ausbildung, bei der unter einer transparenten Eingabefläche eine Anzeige vorgesehen ist, können aus handschriftlich eingegebenen Zeichen gebildete Texte und Zeichnungen auf der transparenten Eingabeeinheit mit einem Stift ohne Schreibsubstanzabgabe eingegeben werden. Hierbei werden die Koordinaten des speziellen Stiftes unter Verwendung elektronischer Verfahren in schneller Folge zur darunter liegenden Anzeigeeinheit übertragen und führen dort zur schritthaltenden Wiedergabe der Schreib- und Zeichenspur. Die handschriftlichen Texte und die Zeichnungen können verbessert und redigiert werden, so z. B. durch partielles Löschen und Überschreiben oder durch Textverschieben oder Text einfügen. Zum Eingeben und zum Redigieren von maschinenschriftlichen Texten, zur Durchführung von Berechnungen und zur Eingabe von Programmen erscheinen an der Anzeigeeinheit die geeigneten Tastaturfelder.

Falls die Anordnung eine Zeichenerkennungseinrichtung aufweist, die die handschriftlich eingegebenen Zeichen in entsprechende Normzeichen umsetzt, können diese an der zugehörigen Anzeigeeinheit dargestellt werden.

Weitere vorteilhafte Ausgestaltungen des Erfindungsgegenstandes sind den weiteren Unteransprüchen zu entnehmen.

Die Erfindung wird anhand von Ausführungsbeispielen im folgenden näher erläutert. Es zeigen:

Figur 1 eine schaubildliche Darstellung der Eingabeeinheit,

Figur 2 die Eingabeeinheit entsprechend Figure 1 mit aufgeklappter Tastatur,

Figur 3 eine Eingabeeinheit mit aufgeklapptem Rechenfeld,

Figur 4 ein Teil der Eingabefläche mit einer Cursoransteuereinrichtung,

Figur 5 eine zweite Ausführungsform für eine Cursor-ansteuerungseinrichtung,

Figur 6 eine schematische Darstellung der Eingabeeinheit und

Figur 7 ein Schaltbild der Anordnung.

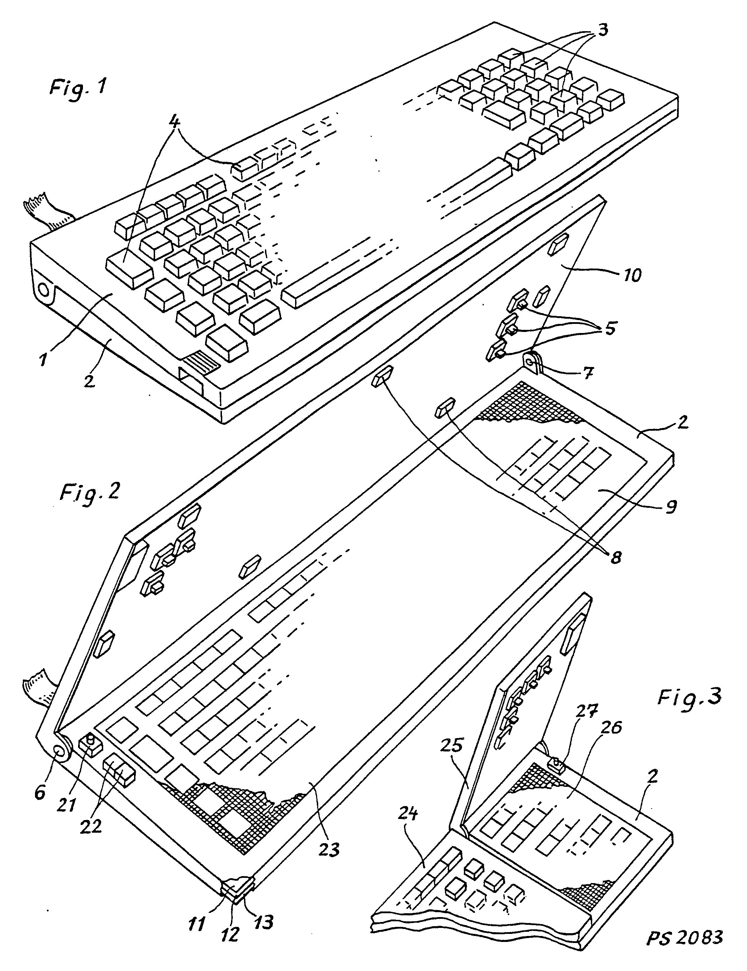

Die Figur 1 zeigt eine beispielsweise Anordnung zum Eingeben und Verarbeiten von Zeichen und/oder grafischen Mustern in elektronischen Datenverarbeitungsanlagen, die aus einem Tastatur-Tablett 1 und einem Grafik-Tablett 2 besteht. Das Tastatur-Tablett 1 weist eine für Schreibmaschinen übliche Tastatur mit beweglichen Schreibtasten 3 und sonstigen Funktionstasten 4 auf, deren Tastenstößel 5 in der aufgeklappten Stellung gemäß Figur 2 zu sehen sind. Das Tastatur-Tablett 1 ist an dem Grafik-Tablett 2 um Achsen 6, 7 verschwenkbar angeordnet. Der Abstand der Tastenstößel 5 zu der Eingabefläche 9 des Grafik-Tabletts 2 wird über Abstandselemente 8 an der Unterseite 10 des Tasten-Tabletts 1 gewährleistet.

Der Tastenstößel 5 kann je nach verwendeter Tablett-Technik elastisch oder fest ausgebildet sein und z. B. aus einer aufsteckbaren Kappe bestehen. Je nach Auflösung des Tabletts ist vorgesehen, daß mehrere Pixelpositionen von einer Taste erfaßt werden. Hierdurch wird eine hohe Schaltgenauigkeit erzielt, da eine Pixelposition immer kontaktiert wird. Bei diesem Verfahren werden im Tastatur-Modus mehrere Leiterbahnen von einer Taste angesprochen und von dem Mikrocomputer abgefragt.

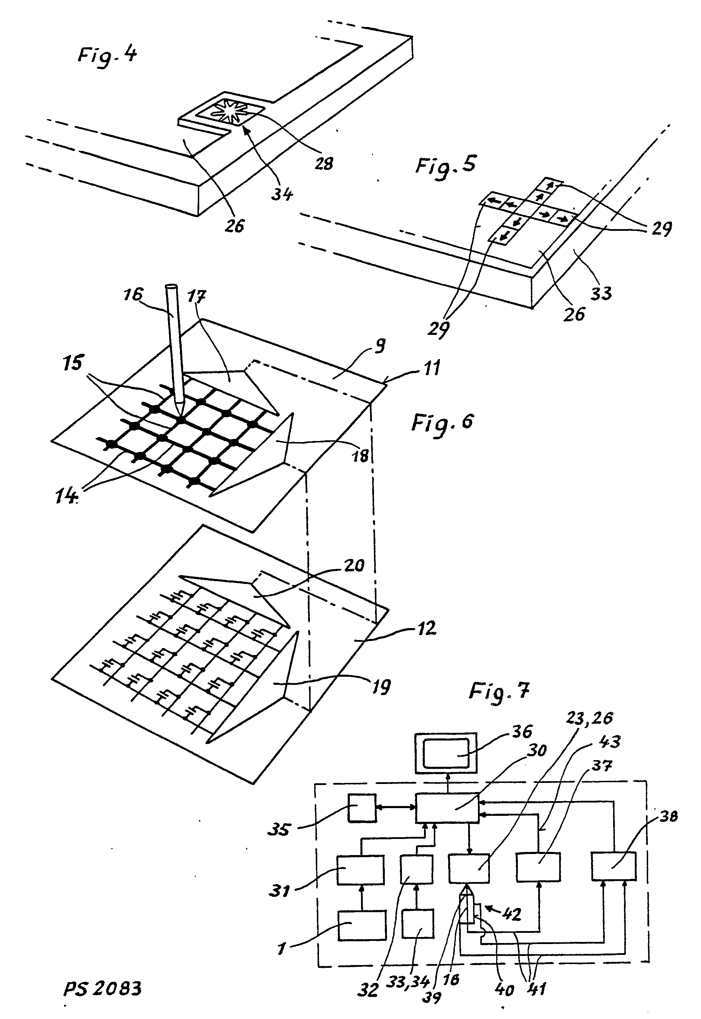

Das Grafik-Tablett 2 besteht zum Beispiel aus drei übereinander liegenden, mechanisch und elektrisch miteinander verbundenen Schichten 11, 12, 13. Die oberste Schicht 11 kann als durchsichtige Eingabeeinheit mit einer Eingabefläche 9 ausgebildet sein. Die Eingabefläche 9 besteht z. B. aus einer Folienkontaktmatrix mit fein verteilten Sensorelementen oder Kontaktstreifen. Als Koordinateneingabevorrichtungen sind übrigens eine Vielzahl verschiedener Vorrichtungen einsetzbar, wie z. B. Vorrichtungen mit elektromagnetischem Induktionssystem, Vorrichtungen mit elektrostatischem Kapazitätssystem, Vorrichtungen mit Transparentelektrodensystem oder Vorrichtungen mit optischem Erfassungssystem. So besteht die Sensorvorrichtung zur Erfassung der X- und Y-Koordinaten von Eingabepunkten gemäß Figur 6 aus einer Eingabefläche 9 mit einer ersten Gruppe parallel zueinander liegender Elektroden 14 und einer zweiten Gruppe parallel zueinander liegender Elektroden 15, die gegenüber der ersten nachgiebig angeordnet sind und diese kreuzen. Wenn nun Buchstaben und/oder Figuren auf die Eingabefläche 9 unter Verwendung eines Schreibgriffels 16 gezeichnet werden, dann wird durch die Druckbeaufschlagung an dem jeweiligen Eingabepunkt ein elektrischer Kontakt zwischen den zugehörigen Elektroden der beiden genannten Gruppen hergestellt. Hierbei werden in bekannter Weise unter Verwendung von Codierern 17, 18 die Koordinaten des Griffels 16 ermittelt und die entsprechende Schreibspur wird unter Verwendung von Codierern 19, 20 auf einer Anzeigeeinheit dargestellt, die bei insgesamt transparent ausgebildeten Kontaktschichten aus einem in das Tablett integrierten Anzeigeelement (Anzeigeeinheit 12) bestehen kann, die aber auch ein normaler Monitor sein kann.

Das Funktionsprinzip der Anordnung besteht darin, daß die mittels des Griffels 16 oder auch einer Fingerkuppe auf der Eingabefläche 9 erzeugten Druckspuren oder Druckpunkte über die in dieser Eingabeeinheit enthaltenen Sensorelemente in elektrische Signale umgewandelt werden und daß unter Verwendung der in der Schicht 13 enthaltenen Steuereinheit mit den in diesen Signalen angegebenen Koordinaten der jeweilige Schriftzug, Linienzug oder die durch Fingerdruck ausgewählte Zeichenmenge auf der Anzeigeeinheit 12 dargestellt wird und daß die Signale außerdem in der Steuereinheit zwischengespeichert und für bestimmte Anwendungen verarbeitet werden. Bei der in der Figur 1 dargestellten Anordnung befindet sich diese in dem Tastatur-Modus, d.h., daß die Tasten stößel 5 bei Betätigung der Schreibtasten 3 oder Funktionstasten 4 die Sensorelemente in der Eingabefläche 9 beaufschlagen. Die hierdurch erzeugten Signale erzeugen über ein in der Steuereinheit enthaltenes Programm die entsprechenden Schriftzeichen auf einer Anzeige oder auf einem sonstigen Aufzeichungsträger.

Bei der Darstellung der Anordnung nach Figur 2 befindet sich diese in dem Grafik-Modus. Hierbei ist das Tastatur-Tablett 1 um die Achsen 6, 7 im Gegenuhrzeigersinn verschwenkt worden. Bei diesem Schwenkvorgang zum Freigeben der Eingabefläche 9 des Grafik-Tabletts 2 wird ein Betriebsartenschalter 21 geschaltet, der sich auf dem Grafik-Tablett 2 neben der Eingabefläche 9 befindet. Bei dem Schaltvorgang dieses Betriebsartenschalters 21 wird die Anordnung automatisch von dem Tastatur-Modus auf GrafikModus umgeschaltet. In dieser Funktionsstellung können mittels eines Griffels 16 oder einer Fingerkuppe beliebige Druckspuren oder Druckpunkte auf der Eingabefläche 9 erzeugt werden, wodurch elektrische Signale zur Erzeugung handschriftlicher Zeichen und/oder grafischer Muster auf der Anzeigeeinheit ausgelöst werden. In dieser Betriebsart können auch Redigierfunktionen durchgeführt werden, wie Löschen, Korrigieren, Einfügen und Verschieben beliebiger Teile der eingegebenen Texte bzw. der Handzeichnung. Die mit dem Griffel 16 eingegebenen handschriftlichen Texte sowie die Handzeichnungen werden in der Anordnung gespeichert.

Es ist auch möglich, in Form von Maschinenschrift gespeicherte Texte, die auf der Anzeigeeinheit dargestellt werden, handschriftlich zu redigieren. Zu diesem Zweck wird ein Betriebs-artenschalter 22 neben der Eingabefläche 9 auf dem Grafik-Tablett 2 betätigt, wodurch die Anordnung von dem Grafik-Modus auf den Tastatur-Modus umschaltbar ist. Hierbei wird gleichzeitig die Tastenanordnung auf dem verschwenkten Tastatur-Tablett 1 auf der unterhalb dem transparent ausgebildeten Grafik-Tablett 2 angeordneten Anzeigeeinheit 12 nachgebildet. Zum Korrigieren oder Löschen werden dann die entsprechenden Tasten mit den Fingerkuppen beaufschlagt, wodurch die entsprechenden Funktionen ausgelöst werden.

Wenn die Anordnung keine Anzeigeeinheit unter der Eingabefläche 9 aufweist, dann kann die Tastaturnachbildung entsprechend einer Tastatur für eine Schreibmaschine auch durch Auflegen einer Folie 23 mit einer entsprechend aufgedruckten Tastatur gemäß Figur 2 erzeugt werden. Im Rahmen der Erfindung ist es selbstverständlich auch möglich, die Eingabefläche 9 unmittelbar durch einen Aufdruck mit einer Tastaturnachbildung entsprechend der Tastatur des Tastatur-Tabletts 1 zu versehen. Gleichzeitig kann auch ein Raster, z. B. in mm-Abständen, vorzugsweise andersfarbig aufgedruckt sein, das die pixelweise Grafikeingabe erleichtert.

Auch kann die Eingabefläche 9 mit auswechselbaren Abdeckungen versehen werden, die an verschiedene Softwarepakete optisch angepaßt sind.

Bei der in der Figur 3 dargestellten Anordnung besteht das Tastatur-Tablett aus einem Schreibmaschinentastenfeld 24 und einem entsprechend einer Tastatur für eine Rechenmaschine und/oder einer Funktionstastatur ausgebildeten Tastenfeld 25. Bei dieser Ausführungsform ist das Tastenfeld 25 separat verschwenkbar angeordnet, d.h., daß das Tastenfeld 24 in der Funktionslage verbleiben kann. In der Figur 3 befindet sich das Tastenfeld 25 in der verschwenkten Lage, wobei die darunter liegende Eingabefläche 26 als Koordinateneingabevorrichtung freigegeben worden ist. Auch hierbei ist neben der Eingabefläche 26 ein Betriebsartenschalter 27 angeordnet, durch den die Eingabeeinheit von Rechentastatur-Modus auf Grafik-Modus automatisch umschaltbar ist. Die Eingabefläche 26 dient hierbei wieder zur Eingabe von handschriftlichen und/oder grafischen Zeichen oder Mustern. Auch kann diese Eingabefläche 26 gemäß den Figuren 4 und 5 Cursor-Ansteuereinrichtungen aufweisen.

Gemäß Fiugr 4 weist die Cursor-Ansteuereinrichtung Rillenmulden 28 auf, die auch für Blindeingabe geeignet sind. Weiterhin können Cursor-Tasten 29 auf der Eingabefläche 26 nachgebildet sein, die dann als Sensortasten wirken, siehe Figur 5. Es ist aber auch möglich, die gesamte Eingabefläche 26 zur Cursor-Steuerung zu verwenden, die dann mindestens einen Teilausschnitt einer Anzeigeeinheit nachbildet.

Auch kann die Eingabefläche 26 unter dem rechten Tastenfeld 25 eine Nachbildung der Rechentastatur in Form eines Aufdruckes aufweisen.

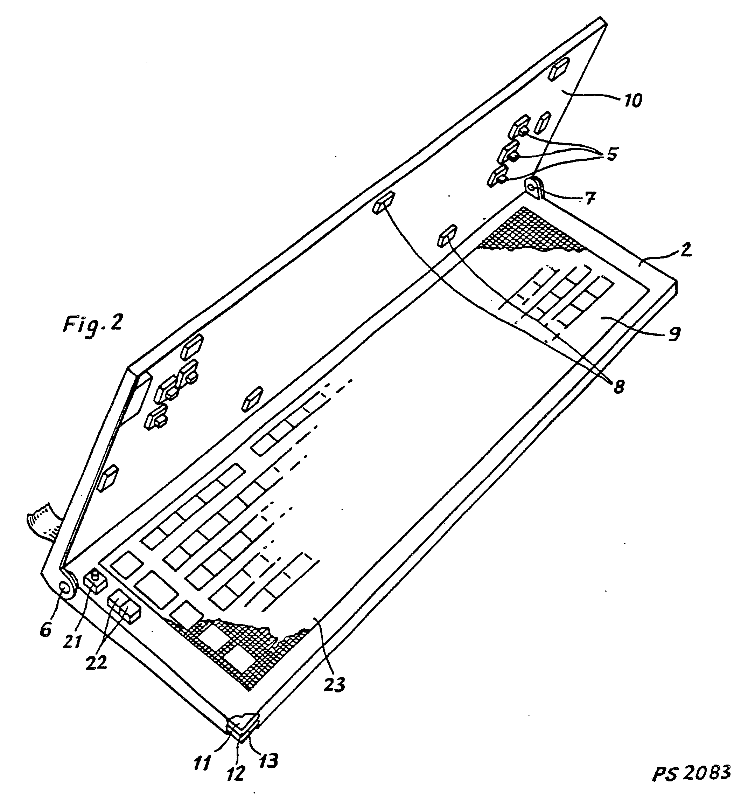

In der Figur 7 ist ein Schaltbild der Anordnung dargestellt. An einen Mikrocomputer 30 sind das Tastatur-Tablett 1 über einen Encoder 31 und die Cursorsteuereinrichtungen 33, 34 über einen Encoder 32 angeschlossen. Der Mikrocomputer 30 weist ein Cursorregister 35 auf, welches jeweils diejenige Stelle eines Bildschirms 36 festhält, welche z. B. über die Tastatur 1 mit einem Zeichen belegt wurde, worauf dann der Cursor die nächst einzugebende Bildschirmstelle markiert. Mittels der Cursorsteuereinrichtung 33, 34 ist der Cursor auf dem Bildschirm 36 schrittweise zu versetzen, so daß vom Benutzer diejenige Zeichenstelle aufgesucht werden kann, an der - außerhalb des normalen Cursorfortlaufs, eine korrigierende oder ergänzende Eingabe über die Tastatur 1 erfolgen kann.

An den Mikrocomputer 30 sind außerdem die Eingabeflächen 9, 26 angeschlossen, die durch den Eingabegriffel 16 beaufschlagbar sind. Dieser, bei diesem Ausführungsbeispiel als sogenanntes kapazitives Eingabeelement ausgebildete Griffel 16 weist eine gegenüber seinem Außenmantel 40 elektrisch isolierte Griffelspitze 39 auf. Diese ist über ein Kabel 41 mit einem Analog/Digitalwandler 37 verbunden. Dieser ist über ein Flachkabel 43 an den Mikrocomputer 30 angeschlossen. Ist der Griffel 16 mit seiner Spitze 39 auf die als Widerstandsschicht ausgebildete Eingabefläche 9 gesetzt, dann liegt an ihr abwechselnd eine der jeweiligen X- bzw. Y-Koordinate der Griffelstellung entsprechende Teilspannung an. Der Wandler 37 digitalisiert diese Gleichspannung, wobei der Mikrocomputer 30 erkennt, ob es sich um einen X-oder um einen Y-Koordinatenwert handelt.

Durch die Handhabung des Griffels 16 wird ein Schaltglied 42 betätigt, dem eine Auswerteschaltung 38, insbesondere ein Schmitt-Trigger, nachgeschaltet ist, welche ebenfalls über das Flachkabel 9 an den Mikrocomputer 30 angeschlossen ist. Bei einem Schalten der Auswerteschaltung 38 infolge einer Handhabung des Griffels 16 werden die Cursorsteuerungen 33, 34 bzw. deren Encoder 32 vom Cursorregister 35 getrennt und diesem werden vom Mikrocomputer 30 die Daten des Wandlers 37 zugeführt. Das Schaltglied 42 kann z. B. ein am Griffel 16 angeordneter, elektromechanischer Tastschalter sein.

Diese erfindungsgemäße Anordnung, die insbesondere für Intelligenz-Arbeitsplätze für den Bereich von Text, die Bürografik, Schriften- und Sonderzeichendesign, Logo-Gestaltung, wechselbare Sondertastaturen einsetzbar ist, kann aber auch ein Tablett aufweisen, das als Kontaktelement eine anisotrop leitfähige Folie besitzt, die zwischen zwei Leiterbahnträgern (nicht dargestellt) angeordnet ist.

Desweiteren ist es auch ohne weiteres möglich, das Tastaturtablett auch als eine alleine funktionsfähige Einheit auszubilden, die dann eigene Sensorelemente oder Schalterelemente besitzt, wodurch sich eine Funktionsumschaltung vom Tastatur- zum Tablett-Modus erübrigen könnte. Diese Ausbildung wäre dann sinnvoll, wenn die verwendete Tablett-Technologie zu hohe Kosten im Bereich der Tastenstößel verursachen würde. Eine solche Maßnahme würde den wesentlichen Gedanken der erfindungsgemäßen Vorrichtung nicht beeinträchtigen, die im wesentlichen auf die ergonomische, platzsparende und in den Gebrauchsfunktionen vielfältige Einsatzmöglichkeit an einem Büroarbeitsplatz abzielt.

**Ansprüche**

1. Anordnung zum Eingeben und Verarbeiten von Zeichen und/oder grafischen Mustern in elektronischen Datenverarbeitungsanlagen unter Verwendung einer Eingabeeinheit und einer Steuereinheit, die die mittels der Eingabeeinheit eingegebenen Zeichen und/oder grafischen Muster einer Ausgabeeinheit zuführt, **dadurch gekennzeichnet,** daß die Eingabeeinheit ein als Koordinatenvorrichtung flach ausgebildetes Grafik-Tablett (2) mit einer Eingabefläche (9, 36) und mit matrixförmig angeordneten Sensorelementen aufweist, die die mittels eines Griffels, einer Fingerkuppe oder durch bewegliche Tasten einer alphanumerischen Tastatur (1) erzeugten Druckspuren oder Druckpunkte als elektrische Signale der Steuereinheit (13) zur Erzeugung alphanumerischer Zeichen, handschriftlicher Zeichen und/oder grafischer Muster zuführen, daß die alphanumerische Tastatur (1) aus der Arbeitsstellung mit der Eingriffsfläche (9, 26) in eine diese Eingabefläche (9, 26) freigebende Stellung bewegbar ist und daß die Eingabeeinheit Betriebsartenschalter (21, 22, 27), deren Programme z. B. zur Erzeugung alphanumerischer oder grafischer Zeichen in der Steuereinheit (13) enthalten sind, aufweist.

2. Anordnung nach Anspruch 1, **dadurch gekennzeichnet,** daß das Tastatur-Tablett (1) schwenkbar an dem Grafik-Tablett (2) angeordnet ist.

3. Anordnung nach Anspruch 1 oder 2, **dadurch gekennzeichnet,** daß das Grafik-Tablett (2) neben der Eingabefläche (26, 9) einen Betriebsartenschalter (21, 27) aufweist, der beim Verschwenken des Tastatur-Tabletts (1) in die Arbeitsstellung zum Umschalten von Tablett- auf Tastatur-Modus automatisch betätigbar ist.

4. Anordnung nach Anspruch 3, **dadurch gekennzeichnet,** daß das Grafik-Tablett weitere Betriebsartenschalter (22) aufweist, die bei Freigabe der Eingabefläche (23) von Hand betätigbar sind.

5. Anordnung nach Anspruch 4, **dadurch gekennzeichnet,** daß eine Tastennachbildung entsprechend einer Tastatur für eine Schreibmaschine oder einen sonstigen Terminal auf einer Folie (23) angeordnet ist, die auf die Eingabefläche (9) aufleg- oder befestigbar ist.

6. Anordnung nach Anspurch 4, **dadurch gekennzeichnet,** daß die Tastaturnachbildung entsprechend einer Tastafur für eine Schreibmaschine aus einem Aufdruck auf der Eingabefläche (9) besteht.

7. Anordnung nach Anspurch 4, **dadurch gekennzeichnet,** daß die Tastaturnachbildung auf einer unterhalb des transparent ausgebildeten Grafik-Tabletts (2) angeordneten Anzeigeeinheit (12) darstellbar ist.

8. Anordnung nach einem der vorhergehenden Ansprüche, **dadurch gekennzeichnet,** daß auswechselbare Abdeckungen auf das Grafik-Tablett (2) aufsetzbar sind, die an verschiedene Softwarepakete optisch angepaßt sind.

9. Anordnung nach einem der vorhergehenden Ansprüche, **dadurch gekennzeichnet,** daß die Tastatur ein entsprechend einer Tastatur für eine Schreibmaschine ausgebildetes Tastenfeld (24) und eine entsprechend einer Tastatur für eine Rechenmaschine ausgebildetes Tastenfeld (25) aufweist und daß das Tastenfeld (25) zur Freigabe der darunter liegenden Eingabefläche (26) getrennt verschwenkbar angeordnet ist.

10. Anordnung nach Anspruch 9, **dadurch gekennzeichnet,** daß ein Umschalter (27) neben der Eingabefläche (26) angeordnet ist und durch das verschwenkbare Tastenfeld (25) automatisch betätigbar ist.

11. Anordnung nach Anspruch 10, **dadurch gekennzeichnet,** daß die Eingabefläche (26) der Eingabeeinheit unterhalb des Rechentastaturfeldes (25) eine Cursorsteuereinrichtung für einen Cursor auf einem Bildschirm (36) aufweist.

12. Anordnung nach Anspruch 11, **dadurch gekennzeichnet,** daß die Cursorsteuereinrichtung Markierungen, z. B. nachgebildete Cursortasten aufweist, die auf der Eingabefläche (26) aufgedruckt sind.

13. Anordnung nach Anspruch 11, **dadurch gekennzeichnet,** daß die Cursorsteuereinrichtung (34) aus Rillenmulden (28) in der Eingabefläche (26) besteht.

14. Anordnung nach einem der vorhergehenden Ansprüche, **dadurch gekennzeichnet,** daß die Steuereinheit (13) derart ausgebildet ist, daß aus den Zeichen gebildete gespeicherte Texte mittels der Eingabeeinheit redigierbar sind.

15. Anordnung nach einem der vorhergehenden Ansprüche, **dadurch gekennzeichnet,** daß die Eingabeeinheit als Folienkontaktmatrix ausgebildet ist und daß mehrere Pixelpositionen für einen Tastenstößel (5) vorgesehen sind.

16. Anordnung nach einem der vorhergehenden Ansprüche, **dadurch gekennzeichnet,** daß die Steuereinheit (13) ebenfalls flach ausgebildet und unterhalb der flachen Anzeigeeinheit (12) angeordnet ist und eine Zeichenerkennungs einrichtung aufweist, die die handschriftlich eingegebenen Zeichen in entsprechende Normzeichen umsetzt und auf der Anzeigeeinheit (12) darstellt.

EP 0 309 685 A2

Fig. 1

Fig. 2

Fig. 3

PS 2083

Fig. 4

28

34

26

Fig. 5

29

29

29

33

26

16    17

15

9

11

Fig. 6

18

14

20

12

19

Fig. 7

36    23,26

30    43

37

35    38

31

1

32    33,34    16    40    41
39

*Fig. 2*

PS 2083